# EUROPEAN PATENT APPLICATION

(11) **EP 4 844 020 A1**
(43) Date of publication of application: **25.11.2026**
(21) Application number: 26178125.6
(22) Date of filing: 12.05.2026
(51) Int. Cl.: C08J 9/10, B29C 35/08, B29C 44/00

(54) **POLYPROPYLENE COMPOSITION, ELECTRON-RADIATION POLYPROPYLENE FOAM AND PREPARATION METHOD THEREOF**

(30) Priority: 16.05.2025 CN 202510633162
(71) Applicant: Benecke Changshun Auto Trim (Zhangjiagang) Co., Ltd, Zhangjiagang, Jiangsu 215632 (CN)
(72) Inventor: Ding, Zhongxie, Zhangjiagang City, 215632 (CN); Pan, Sheng, Zhangjiagang City, 215632 (CN); Ma, Yao, Zhangjiagang City, 215632 (CN)
(74) Representative: Tergau & Walkenhorst Intellectual Property GmbH

(57) **Abstract**

The present invention discloses a polypropylene composition, an electron-radiation polypropylene foam, and a preparation method thereof. The polypropylene composition is used for preparing an electron-radiation crosslinked polypropylene foam, and comprises an ethylene-propylene copolymer, a stabilizer and a foaming agent, wherein the components of the foaming agent comprise azodicarbonamide, and the particle size D50 of the azodicarbonamide is in the range of 20 µm < D50 < 35 µm. According to the present invention, azodicarbonamide having a specific particle size is selected as the foaming agent for the electron-radiation crosslinked polypropylene foam, so that the thermal stability of the foaming agent can be improved without introducing other substances and with as little change as possible, frequent deposition of precipitated substances can be prevented, the cleaning frequency can be reduced, and production efficiency and production continuity can be improved, which is an unexpected discovery.

## Description

### Technical Field

The present invention relates to the field of polymer materials, and in particular to a polypropylene composition, an electron-radiation polypropylene foam, and a preparation method thereof.

### Background Art

Polypropylene foam belongs to a type of polyolefin foam material, and is generally divided into chemically crosslinked polypropylene foam and electron-radiation crosslinked polypropylene foam. Among these, electron-radiation crosslinked polypropylene foam (IXPP) has many advantages such as a smooth surface, fine cells, high toughness, non-toxicity, no odor, and chemical corrosion resistance, and therefore is widely used in fields such as the automobile industry, packaging materials for electronic devices, and sporting goods. For example, in the field of automotive interiors, IXPP can be used for preparing PVC-PP artificial leather; as a foamed-layer structure, IXPP can improve the softness and hand feel of the artificial leather.

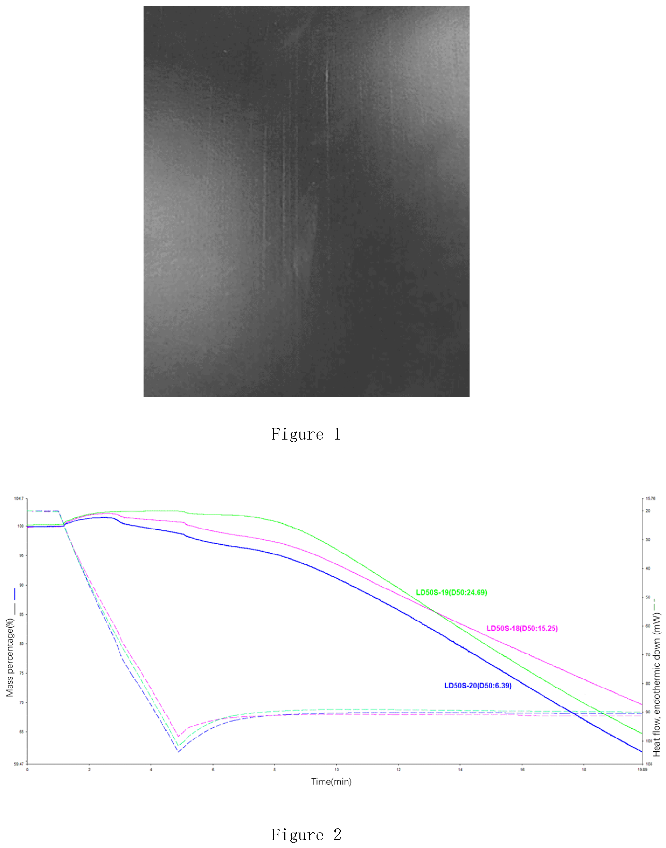

The entire production process of polypropylene foam comprises steps such as extrusion, electron crosslinking and foaming. At present, the mainstream production of IXPP on the market mainly uses azodicarbonamide (ADCA) as the foaming agent. When IXPP foam is produced, the plasticizing temperature of the PP material is relatively high; the heating temperature is generally set to 160-165°C, and in addition a twin-screw extruder provides the material with an additional 30-40°C of shear heat. This causes the final melt temperature to approach the thermal decomposition temperature of ADCA (200-205°C). Therefore, ADCA may undergo a small amount of pre-decomposition during extrusion, producing polar substances such as azoles and cyanuric acid compounds, and these polar substances readily precipitate in the non-polar melt and then accumulate at positions such as the screw, die head and die lip of the extruder. In particular, deposition of precipitated substances at the die lip will form scratch lines on the surface of the extruded sheet, as shown in Fig. 1, affecting the appearance of the final product. For the automotive industry, which has high quality requirements, this problem is particularly significant. For example, during the production of automotive interiors, once deposition occurs, the extrusion equipment needs to be cleaned promptly. Cleaning takes a long time, seriously affecting production efficiency, and frequent deposition also increases the scrap rate. However, if the processing temperature is lowered, plasticization of the PP material will be poor, ultimately affecting the various mechanical properties of the product. Therefore, this problem needs to be addressed from other aspects.

In order to solve the above problem, the following methods are currently mainly used:
1. adding a processing lubricant to the foaming-agent formulation to reduce shear friction heat;
2. switching to a high-temperature-resistant foaming agent containing heavy-metal salt ions;
3. performing surface treatment on ADCA to improve high-temperature stability.

Among these, heavy-metal salt ions are prohibited substances in the automotive industry and are not acceptable. Moreover, all of these methods introduce additional substances into the formulation system, which may lead to changes in material properties. In addition, these methods may require frequent adjustment of production process parameters, are relatively costly, and are not highly universal. Especially for the automotive industry, which is known for its high level of rigor, unstable material properties and changes in production parameters are undesirable.

### Summary of the Invention

To solve the above technical problems, embodiments of the present invention disclose a polypropylene composition for preparing an electron-radiation crosslinked polypropylene foam. The polypropylene composition comprises an ethylene-propylene copolymer, a stabilizer and a foaming agent, wherein the components of the foaming agent comprise azodicarbonamide, and the particle size D50 of the azodicarbonamide is in the range of 20 µm < D50 < 35 µm.

By adopting the above technical solution, the thermal stability of the foaming agent can be improved without introducing other substances and with as little change as possible, frequent deposition of precipitated substances can be prevented, the cleaning frequency can be reduced, and production efficiency and production continuity can be improved. In addition, the cost is relatively low and universality is relatively strong.

Optionally, in parts by weight, the polypropylene composition comprises 35-90 parts of the ethylene-propylene copolymer, 10-15 parts of the foaming agent, 0-5 parts of a release agent, 0-50 parts of a polyolefin elastomer, 0-2 parts of a color masterbatch, and 1-5 parts of the stabilizer.

Optionally, in parts by weight, the polypropylene composition consists of 35-65 parts of the ethylene-propylene copolymer, 11-15 parts of the foaming agent, 1-3 parts of the release agent, 25-50 parts of the polyolefin elastomer, 1-2 parts of the color masterbatch, and 2-5 parts of the stabilizer.

Optionally, the particle size D50 of the azodicarbonamide is in the range of 21 µm ≤ D50 ≤ 28 µm.

Optionally, the particle size D50 of the azodicarbonamide is in the range of 25 µm ≤ D50 ≤ 28 µm.

Optionally, the azodicarbonamide remains undecomposed at 205°C for at least 7 minutes.

Optionally, the components of the foaming agent are a carrier and azodicarbonamide; in the foaming agent, the mass percentage of the carrier is 30%-60%, and preferably the carrier is one of linear low-density polyethylene, polypropylene and polyethylene.

According to another specific embodiment of the present invention, embodiments of the present invention disclose an electron-radiation polypropylene foam made from the above polypropylene composition.

By adopting the above technical solution, a good surface condition of the electron-radiation polypropylene foam can be ensured.

According to another specific embodiment of the present invention, embodiments of the present invention disclose a preparation method for the above electron-radiation polypropylene foam, comprising the following steps:
extrusion: loading the polypropylene composition into an extruder, extruding a sheet at 150-180°C, and winding the sheet;
electron-radiation crosslinking;
foaming.

By adopting the above technical solution, during the extrusion process, the thermal stability of the foaming agent can be utilized to prevent frequent deposition of precipitated substances.

Optionally, in the electron-radiation crosslinking step, the wound sheet is unwound and passes through high-voltage electric-field electron-beam crosslinking equipment, so as to subject the extruded sheet to electron-radiation crosslinking; and in the foaming step, the base sheet having undergone electron-radiation crosslinking is continuously unwound, first enters a preheating furnace at 150-230°C for preheating, and then passes through a foaming furnace at 350-470°C for foaming.

### Brief Description of the Drawings

Fig. 1 shows a photograph of scratches appearing on the surface of the extruded material;
Fig. 2 shows isothermal (static) thermogravimetric curves of azodicarbonamide having different particle sizes;
Fig. 3 shows a scanning electron microscope photograph of a cross section of the foam after foaming in Example 1 of the present invention;
Fig. 4 shows a scanning electron microscope photograph of a cross section of the foam after foaming in Comparative Example 3 of the present invention.

### Detailed Description of Embodiments

The embodiments of the present invention are described below by means of specific embodiments. A person skilled in the art can readily understand other advantages and effects of the present invention from the contents disclosed in this specification. Although the description of the present invention will be introduced in conjunction with preferred embodiments, this does not mean that the features of the present invention are limited only to such embodiments. On the contrary, the purpose of introducing the invention in conjunction with embodiments is to cover other alternatives or modifications that may extend based on the claims of the present invention. In order to provide an in-depth understanding of the present invention, many specific details are included in the following description. The present invention may also be implemented without these details. In addition, in order to avoid confusion or obscuring the focus of the present invention, some specific details will be omitted from the description. It should be noted that, where no conflict exists, the embodiments of the present invention and the features in the embodiments may be combined with each other.

It should be noted that, in this specification, similar reference numerals and letters indicate similar items in the drawings below. Therefore, once an item is defined in one drawing, it does not need to be further defined or explained in subsequent drawings.

In order to make the objectives, technical solutions and advantages of the present invention clearer, the embodiments of the present invention will be further described in detail below with reference to the drawings.

A first aspect of the present invention discloses a polypropylene composition for preparing an electron-radiation crosslinked polypropylene foam. The polypropylene composition comprises an ethylene-propylene copolymer, a stabilizer and a foaming agent, wherein the components of the foaming agent comprise azodicarbonamide, and the particle size D50 of the azodicarbonamide is in the range of 20 µm < D50 < 35 µm.

In order to avoid introducing additional substances into the IXPP system, it is not desirable to modify the foaming agent and other related substances. Moreover, even use of the azodicarbonamide foaming agent having the highest decomposition temperature currently available on the market cannot meet the temperature requirements of the extrusion process. Since it is also necessary to consider how to avoid adjustment of the process as much as possible and ensure the stability and sustainability of the existing system, the room for adjustment is very limited. Not being limited by the conventional practice in the art of using small-particle-size azodicarbonamide, the inventors broke through traditional thinking and instead selected large-particle-size azodicarbonamide, and found that, when azodicarbonamide having a particle size within the range of 20 µm < D50 < 35 µm is selected, the thermal stability of azodicarbonamide at 200-205°C can be significantly improved, the phenomenon of decomposition of azodicarbonamide can be reduced or avoided, and the problem that impurities precipitate and deposit during the extrusion process can be improved without making other changes, thereby prolonging the equipment cleaning cycle and improving production efficiency. At the same temperature, the azodicarbonamide within the range of 20 µm < D50 < 35 µm according to the present invention can maintain its state for a longer period of time; therefore, even if the decomposition temperature is reached during the extrusion process, the azodicarbonamide will not immediately begin to decompose, thereby reducing or avoiding the generation and deposition of impurities. At the same time, within this particle size range, azodicarbonamide also has suitable dispersibility and meets product quality requirements.

In specific embodiments of the present invention, the azodicarbonamide remains undecomposed at 205°C for at least 7 minutes. As shown by the solid lines in Fig. 2 (the abscissa represents time, and the left ordinate represents weight percentage), LD50S-18/19/20 respectively represent three azodicarbonamide foaming agents having different D50 sizes. At the same temperature (205°C), the foaming agent having a D50 of 24.69 µm can remain undecomposed for at least 7 minutes, no decomposition product is generated, and the weight does not decrease. More specifically, it can remain undecomposed for at least 8 minutes. This also matches the extrusion process in production. Taking actual production conditions into account, in production the entire process from the foaming-agent material entering the twin screws of the extruder to finally being mixed uniformly with other materials and extruded from the die head lasts about 5-6 minutes. Since the azodicarbonamide within the range of 20 µm < D50 < 35 µm can remain undecomposed for at least 7 minutes, which is longer than the duration of the extrusion process, the generation and deposition of impurities are reduced or avoided, and the possibility of scratches is reduced.

In specific embodiments of the present invention, in parts by weight, the polypropylene composition comprises 35-90 parts of the ethylene-propylene copolymer, 10-15 parts of the foaming agent, 0-5 parts of a release agent, 0-50 parts of a polyolefin elastomer, 0-2 parts of a color masterbatch, and 1-5 parts of the stabilizer.

The quality of IXPP products is closely related to the quality of the raw-material slurry system. Compared with other industries, the automotive industry, such as the automotive-interior industry, controls the slurry system more strictly. In order to produce high-quality IXPP products, the components of the slurry first need to have good dispersibility. Good dispersibility can ensure good processing performance, ensure that the final molded interior parts have a uniform appearance and quality, and also affect the mechanical properties and other physical properties of the material. As described above, with respect to azodicarbonamide, automotive-interior manufacturers usually select azodicarbonamide having a small particle size, often less than 20 µm, because it is generally believed that a small particle size is easier to disperse, thereby producing a more uniform and fine foam structure during foaming. Moreover, screening the particle size of azodicarbonamide is relatively complicated and is generally not specially carried out. The present invention breaks through conventional thinking and specifically selects azodicarbonamide having a large particle size within a certain range, thereby improving the thermal stability of the azodicarbonamide foaming agent. At the same time, by further cooperating with the component design of the polypropylene composition, the uniformity of the cells after foaming is still maintained at a relatively good level, further ensuring the quality of the foam product. In this way, by making the smallest possible change, pre-decomposition of the foaming agent in the extrusion stage is prevented, accumulation of decomposition products such as azoles and cyanuric acid on the equipment, especially on the extrusion die lip, is reduced, the problem of scratches on the surface of the extruded material caused by precipitates is solved, long-term efficient operation of the extruder is ensured, product quality stability is improved, and the scrap rate is reduced. At the same time, because the azodicarbonamide decomposes less or even does not decompose in the early stage, more active ingredients can also function in the foaming process, thereby improving the foaming effect.

In specific embodiments of the present invention, further, the particle size D50 of the azodicarbonamide is in the range of 21 µm ≤ D50 ≤ 28 µm, which provides both processing performance and thermal stability, further improves product quality, and enhances product performance.

In specific embodiments of the present invention, preferably, in parts by weight, the polypropylene composition consists of 35-65 parts of the ethylene-propylene copolymer, 11-15 parts of the foaming agent, 1-3 parts of the release agent, 25-50 parts of the polyolefin elastomer, 1-2 parts of the color masterbatch, and 2-5 parts of the stabilizer, wherein the particle size D50 of the azodicarbonamide is in the range of 25 µm ≤ D50 ≤ 28 µm. Under this combination, the thermal stability is further improved, and continuous production of more than 30,000 m without any impurity precipitation or deposition and without cleaning the equipment can be realized. Compared with the original situation in which the equipment needed to be shut down and cleaned after every 4,000-5,000 m of extrusion, operating efficiency is greatly improved and the scrap rate is reduced. At the same time, the uniformity of cells after foaming is closer to the level achieved when a conventional small-particle-size azodicarbonamide foaming agent is used.

In specific embodiments of the present invention, specifically, the stabilizer is a hindered phenolic antioxidant, which improves the durability, heat resistance and processing stability of the polypropylene foam, makes it more suitable for fields with strict requirements such as automotive interiors, and improves the environmental aging resistance of the product.

In specific embodiments of the present invention, specifically, the release agent is low-molecular-weight polyethylene particles.

In specific embodiments of the present invention, the components of the foaming agent are a carrier and azodicarbonamide. In specific embodiments of the present invention, in the foaming agent, the mass percentage of the carrier is 30%-60%. Preferably, in the foaming agent, the mass percentage of the carrier is 40%-50%. Specifically, the carrier is linear low-density polyethylene (LLDPE), or the carrier is polyethylene, or the carrier is polypropylene. Preferably, the carrier is linear low-density polyethylene, which can provide the best melt flowability and cell uniformity while maintaining the mechanical properties of the foam, and can both ensure the foaming effect and maintain cost effectiveness.

A second aspect of the present invention discloses an electron-radiation polypropylene foam, which is made from the polypropylene composition of the above embodiments and has good surface condition and use performance.

A third aspect of the present invention discloses a method for preparing the electron-radiation polypropylene foam, comprising the following steps:
extrusion: loading the polypropylene composition into an extruder, extruding a sheet at 150-180°C, and winding the sheet;
electron-radiation crosslinking;
foaming.

During the extrusion process, the entire process lasts about 5-6 minutes. When azodicarbonamide within the range of 20 µm < D50 < 35 µm is used, the generation and deposition of impurities can be reduced or avoided, the possibility of scratches is reduced, the scrap rate is reduced, and there is no need to modify the production line or adjust relevant process parameters, so that higher production efficiency can be achieved at the lowest cost.

Specifically, in the electron-radiation crosslinking step, the wound sheet is unwound and passes through high-voltage electric-field electron-beam crosslinking (EBR) equipment, so as to subject the extruded sheet to electron-radiation crosslinking, ensure that crosslinking can be effectively formed between polypropylene molecular chains, thereby improving the properties of the material, and ensure that the electron beam can act uniformly on the entire sheet while maintaining production efficiency.

Specifically, in the foaming step, the base sheet having undergone electron-radiation crosslinking is continuously unwound, first enters a preheating furnace at 150-230°C for preheating, and then passes through a foaming furnace at 350-470°C for foaming, thereby improving the foaming effect and obtaining a high-quality foam product.

In embodiments of the present invention, under the cooperation of the process and the raw-material system, only the particle size of the azodicarbonamide needs to be adjusted, so that the continuous production time can be greatly increased, frequent shutdown for cleaning is not needed, and the quality of the IXPP product can also be ensured, thereby satisfying the strict standards of the automotive industry.

The following provides further description in conjunction with more specific embodiments. The raw-material formulations used in the examples and comparative examples are shown in Table 1.

| | | Example 1 | Example 2 | Example 3 | Example 4 | Example 5 | Comparat ive Example 1 | Comparat ive Example 2 | Comparat ive Example 3 |
|---|---|---|---|---|---|---|---|---|---|
| Plastic particles | Parts of ethylene-propylene copolyme r / phr | 55 | 35 | 82 | 55 | 55 | 55 | 82 | 55 |
| | Parts of polyolefin elastomer / phr | 25 | 45 | 0 | 25 | 25 | 25 | 0 | 25 |
| | Parts of black masterba tch / phr | 2 | 2 | 2 | 2 | 2 | 2 | 2 | 2 |
| | Parts of release agent / phr | 1.5 | 1.5 | 1.5 | 1.5 | 1.5 | 1.5 | 1.5 | 1.5 |
| Azodicar bonamide foaming agent | Particle size D50 of azodicarb onamide / µm | 25 | 25 | 25 | 21 | 28 | 15 | 15 | 38 |
| | Proportio n of azodicarb onamide / % | 50 | 50 | 50 | 50 | 50 | 50 | 50 | 50 |
| | Parts / phr | 14.5 | 14.5 | 12.5 | 14.5 | 14.5 | 14.5 | 12.5 | 14.5 |
| Stabilizer | Parts of hindered phenolic antioxida nt / phr | 2 | 2 | 2 | 2 | 2 | 2 | 2 | 2 |
| Results | Meters of continuou s productio n without scratches / m | >30000 | >30000 | >20000 | 14300 | >30000 | 4400 | 3100 | >20000 |
| | Cell uniformity after foaming | Good cell uniformity | Good cell uniformity | Good cell uniformity | Good cell uniformity | Good cell uniformity | Good cell uniformity | Good cell uniformity | Poor cell uniformity |

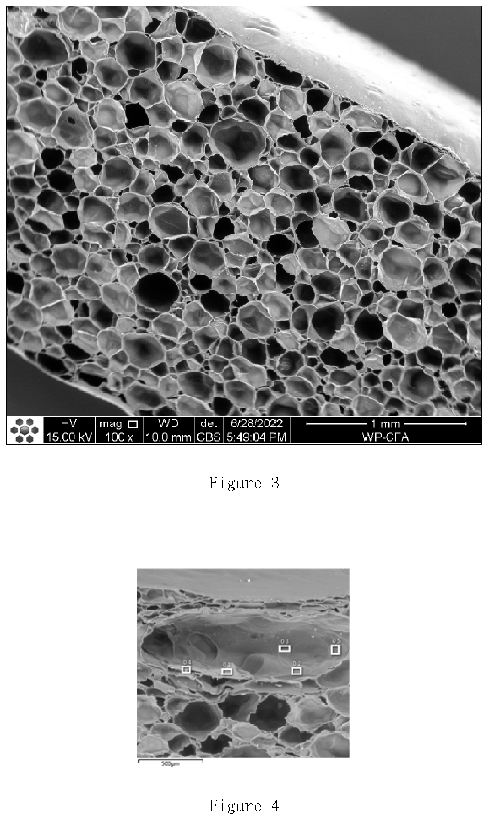

It can be seen from Table 1 that, compared with the comparative examples, each example can carry out continuous production for a considerably long time. The comparative examples use commercially available small-particle-size azodicarbonamide foaming agents; the time for continuous production of 3,000-4,000 m is about 2-3 hours, that is, production has to be stopped for cleaning after 2-3 hours, and cleaning takes about 6 hours, resulting in low production efficiency. Frequent machine start-stop operations also cause machine wear. In contrast, each example can continuously produce more than 20,000 m, reducing the cleaning frequency, greatly improving production efficiency, reducing the scrap rate, and promoting energy conservation, low-carbon environmental protection and sustainable development. Among them, with the cooperation of the raw-material components and the azodicarbonamide within a certain particle size range, Examples 1, 2 and 5 can also achieve scratch-free continuous production of more than 30,000 m. At the same time, under the raw-material system of the present application, after foaming, each example can still maintain a relatively good level of cell uniformity, and the foam products manufactured can meet industry quality requirements. Moreover, when the particle size range is 25 µm ≤ D50 ≤ 28 µm, the cell uniformity is closer to that obtained when a small-particle-size azodicarbonamide foaming agent is used. Taking Example 1 as an example, the cross section of the foam after foaming in Example 1 is shown in Fig. 3. Example 1 uses an azodicarbonamide foaming agent having a D50 of 25 µm; under the raw-material system used therein, the foaming uniformity is still at a relatively good level and the product quality is relatively good. Comparative Example 3 uses an azodicarbonamide foaming agent having a larger particle size; as shown in Fig. 4, the foaming uniformity is poor and the product quality is also greatly affected.

Although the present invention has been illustrated and described with reference to certain preferred embodiments thereof, a person of ordinary skill in the art should understand that the above content is a further detailed description of the present invention in conjunction with specific embodiments, and it cannot be considered that the specific implementation of the present invention is limited only to these descriptions. A person skilled in the art may make various changes in form and detail, including several simple deductions or substitutions, without departing from the spirit and scope of the present invention.

## Claims

1. A polypropylene composition for preparing an electron-radiation crosslinked polypropylene foam, the polypropylene composition comprising an ethylene-propylene copolymer, a stabilizer and a foaming agent, **characterized in that** the components of the foaming agent comprise azodicarbonamide, and the particle size D50 of the azodicarbonamide is in the range of 20 µm < D50 < 35 µm.

2. The polypropylene composition according to claim 1, **characterized in that**, in parts by weight, the polypropylene composition comprises 35-90 parts of the ethylene-propylene copolymer, 10-15 parts of the foaming agent, 0-5 parts of a release agent, 0-50 parts of a polyolefin elastomer, 0-2 parts of a color masterbatch, and 1-5 parts of the stabilizer.

3. The polypropylene composition according to claim 2, **characterized in that**, in parts by weight, the polypropylene composition consists of 35-65 parts of the ethylene-propylene copolymer, 11-15 parts of the foaming agent, 1-3 parts of the release agent, 25-50 parts of the polyolefin elastomer, 1-2 parts of the color masterbatch, and 2-5 parts of the stabilizer.

4. The polypropylene composition according to any one of claims 1 to 3, **characterized in that** the particle size D50 of the azodicarbonamide is in the range of 21 µm ≤ D50 ≤ 28 µm.

5. The polypropylene composition according to any one of claims 1 to 3, **characterized in that** the particle size D50 of the azodicarbonamide is in the range of 25 µm ≤ D50 ≤ 28 µm.

6. The polypropylene composition according to claim 1, **characterized in that** the azodicarbonamide remains undecomposed at 205°C for at least 7 minutes.

7. The polypropylene composition according to claim 1, **characterized in that** the components of the foaming agent are a carrier and azodicarbonamide, wherein the mass percentage of the carrier in the foaming agent is 30%-60%, preferably the carrier is one of linear low-density polyethylene, polypropylene and polyethylene.

8. An electron-radiation polypropylene foam, **characterized in that** it is made from the polypropylene composition according to any one of claims 1 to 7.

9. A method for preparing the electron-radiation polypropylene foam according to claim 8, **characterized in that** the method comprises the following steps:
extrusion: loading the polypropylene composition into an extruder, extruding a sheet at 150-180°C, and winding the sheet;
electron-radiation crosslinking; and
foaming.

10. The method for preparing the electron-radiation polypropylene foam according to claim 9, **characterized in that**, in the electron-radiation crosslinking step, the wound sheet is unwound and passes through high-voltage electric-field electron-beam crosslinking equipment, so as to subject the extruded sheet to electron-radiation crosslinking; and in the foaming step, the base sheet having undergone electron-radiation crosslinking is continuously unwound, first enters a preheating furnace at 150-230°C for preheating, and then passes through a foaming furnace at 350-470°C for foaming.
